# EUROPÄISCHE PATENTANMELDUNG

(11) **EP 1 197 347 A2**
(43) Veröffentlichungstag der Anmeldung: **17.04.2002**
(21) Anmeldenummer: 01123239.4
(22) Anmeldetag: 02.10.2001
(51) Int. Cl.: B42C 19/02

(54) **Schnittstellen-System und Verfahren**

(30) Priorität: 10.10.2000 US 686850
(71) Anmelder: Heidelberger Druckmaschinen Aktiengesellschaft, 69115 Heidelberg (DE)
(72) Erfinder: Hansen, David Robert, Honeoye Falls, NY 14472 (US)
(74) Vertreter: Franzen, Peter

(57) **Zusammenfassung**

Es wird ein System und ein Verfahren, eine Schnittstelle zu einem Hochleistungsscanner (302) zu bilden, offenbart. Ein Treiber ermöglicht Echtzeit-Kommunikation zwischen einer Scananwendung und den Scannern. Der Treiber umfasst eine Anwendungsprogrammschnittstelle, die mit mindestens einem Personalitätsmodul (312A, 312B) verbunden ist, wobei für jeden Scanner (302) ein Personalitätsmodul (312A, 312B) vorgesehen ist. Das Personalitätsmodul erleichtert die Erteilung von Befehlen und die Steuerung eines bestimmten Scanners (302). Die Anwendungsprogrammschnittstelle kann zu einem bestimmten Zeitpunkt mit mehr als einem Personalitätsmodul (312A, 312B) kommunizieren, um einen gleichzeitigen, parallelen Betrieb mehrerer Scanner (302) zu ermöglichen. Der Treiber liefert die durch die Scanvorgänge erzeugten Bilddaten an einen allgemein zugänglichen Zwischenspeicher, wo sie die Scananwendung asynchron abrufen kann.

## Beschreibung

Die vorliegende Erfindung betrifft ein Schnittstellen-System und Verfahren gemäß dem Oberbegriff der Ansprüche 1, 8 und 15.

Quasi jeder Computerbesitzer verfügt heute über einen Drucker und ist in der Lage, qualitativ hochwertige Dokumente auszudrucken. Die Möglichkeit, Dokumente in hoher Auflage und mit besonderer Nachbearbeitung (z. B. gebundene Dokumente) herzustellen, bieten jedoch auch heute noch nur kommerzielle Schnelldruckereien und firmeneigene Hausdruckereien. Die Produktion von Dokumenten in hoher Auflage und mit Nachbearbeitung wird allgemein als Hochleistungs- oder Auflagendruckproduktion bezeichnet. Ein Hochleistungs- oder Auflagendrucker ist eine Druckvorrichtung, die zur schnellen Produktion von Dokumenten in hoher Auflage geeignet ist. Diese Drucker haben in der Regel eine hohe Kapazität in der Handhabung von Papier und bieten die Möglichkeit, verschiedene Arten von Daten aus verschiedenen Quellen zu verarbeiten und die Dokumente nach dem Druckvorgang weiter zu bearbeiten, z. B. zu binden. Trotz des hohen Automatisierungsgrads von Hochleistungsdruckem und der weiten Verbreitung der Computertechnologie insbesondere im Bereich des Desktop Publishings ist der Auflagendruck immer noch ein komplexer Prozess, der auch manuelle Schritte einschließt.

In einer Druckerei gehört es zum Tagesgeschäft, dass Kunden eine Vorlage liefern, von der sie ein fertiges Druckprodukt, z. B. eine gebundene Broschüre, ein dreifach gefalztes Faltblatt oder ein mit Ringbindung versehenes Notizbuch, in der Regel in höherer Auflage von beispielsweise 1000 Stück erstellt haben möchten. Eine Kombination aus der Vorlage und den Anweisungen zur Herstellung des fertigen Produkts wird als "Job" oder "Druckauftrag" bezeichnet. Die Vorlage kann in Papierform oder in elektronischer Form, z. B. auf Diskette, CD ROM oder Band, geliefert werden oder auch direkt über ein Netzwerk (z. B. das Internet) an die Druckerei gesandt werden.

Dokumente, die der Druckerei in Papierform vorliegen, müssen in der Regel zunächst in das Computersystem der Druckerei eingelesen werden, damit sie editiert und auf andere Weise für die Druckproduktion vorbereitet werden können. In der Druckerei befindet sich normalerweise mindestens eine Scannerstation, die aus einem Workstation-Computer und mindestens einem Hochleistungsscanner besteht. Im Vergleich zu herkömmlichen Scannern sind Hochleistungsscanner dazu geeignet, eine große Anzahl von Vorlagen mit hoher Geschwindigkeit und hoher Auflösung fortlaufend einzuscannen. Derartige Scanner sind normalerweise sehr zuverlässige und genau arbeitende Geräte. Trotzdem ist das Scannen von Dokumenten oft sehr aufwändig, insbesondere in einer Druckerei, in der eine große Anzahl von Dokumenten mit hoher Geschwindigkeit gescannt werden muss.

Bei einem normalen Auftrag legt ein Bediener ein Dokument in den automatischen Dokumenteneinzug des Scanners ein. Daraufhin lädt er die Scanneranwendung in der Workstation, sofern dies nicht bereits geschehen ist, und gibt dem Scanner die Anweisung, das Dokument zu scannen. Nach Beendigung des Scanvorgangs kann das gescannte Dokument angezeigt werden und überprüft werden, ob die Wiedergabe originalgetreu ist. Oft kommt es jedoch während des Scanvorgangs zu Fehlern, die ein erneutes Scannen erfordern. Dabei kann es sich um Bedienerfehler oder Fehlfunktionen des Scanners handeln, z. B. um Staub auf dem Scannerglas, fehleingezogene Seiten oder Lampenstörungen. Mitunter müssen auch die Parameter des Scanvorgangs, z. B. die Bildverarbeitungsalgorithmen, die Kontraste oder die Farbbalance an die spezifischen Eigenschaften der Vorlage angepasst werden. Diese Einstellungen ergeben sich nicht zwangsläufig aus einer Betrachtung der Vorlage und können ein mehrfaches erneutes Einscannen der Vorlage nötig machen, bis die Parameter korrekt eingestellt sind. Bei großen Dokumenten ist ein erneuter Scanvorgang zeitaufwändig und kostenintensiv.

Aufgrund der großen Dokumente, der hohen Auslastung von Druckereien und der unweigerlich auftretenden Fehler muss der Scanvorgang so effizient wie möglich sein. Dies bedeutet, dass Bedienerfehler sowie die Kosten der Fehlerermittlung und -korrektur reduziert werden müssen. Eine Lösung besteht darin, intelligente und effiziente Scanneranwendungen bereitzustellen, die der Bediener an der Scanner-Workstation einsetzen kann und die Probleme antizipieren sowie eine intuitive effiziente Steuerung des Scanvorgangs ermöglichen. Derartige Anwendungen unterliegen häufig jedoch Einschränkungen, die durch die Hardware- und Software-Schnittstellen zum Scanner hervorgerufen werden, da diese oft nicht die notwendige Kontrolle über den Scanvorgang bieten und nicht in der Lage sind, eine Rückmeldung bezüglich des Status und Verlaufs des Scanvorgangs zu liefern, um Fehler zu ermitteln und zu korrigieren. Außerdem bieten diese Schnittstellen nicht die Möglichkeit, mehrere Scanner oder von der Scanner-Workstation weitere entfernt liegende Scanner effizient zu steuern.

Demgemäß besteht Bedarf an einem effizienten System und einem effizienten Verfahren für Schnittstellen von Scanneranwendungen und Hochleistungsscanner.

Es ist daher Aufgabe der Erfindung, eine Vorrichtung und ein Verfahren für eine effiziente Schnittstelle von Scanneranwendungen und Hochleistungsscanner zu schaffen. Diese Aufgabe wird mit einer Vorrichtung gemäß Anspruch 1 sowie Anspruch 8 gelöst, sowie durch ein Verfahren gemäß Anspruch 15.

Eingangs sei erwähnt, dass sich die nachfolgend beschriebenen bevorzugten Ausführungsformen auf einen Treiber beziehen, der als Schnittstelle zwischen einem ersten Anwendungsprogramm und einem ersten Scanner dient. Das erste Anwendungsprogramm überträgt Befehle an den ersten Scanner, und der erste Scanner scannt ein Dokument und übermittelt die Bilddaten und die Statusdaten des Scanvorgangs an das erste Anwendungsprogramm. Der Treiber umfasst eine Anwendungsprogrammschnittstelle, die mit dem ersten Anwendungsprogramm gekoppelt ist und dazu dient, die Befehle von dem ersten Anwendungsprogramm zu empfangen und dem ersten Anwendungsprogramm Bilddaten und Statusdaten zuzuführen. Der Treiber umfasst ferner ein erstes Scanner-Personalitätsmodul, das mit der Anwendungsprogrammschnittstelle und dem ersten Scanner gekoppelt ist und dazu dient, die Bilddaten und die Statusdaten vom ersten Scanner zu empfangen und die Befehle an den ersten Scanner zu übermitteln. Die Anwendungsprogrammschnittstelle und das Personalitätsmodul erleichtern die Echtzeit-Kommunikation zwischen dem ersten Anwendungsprogramm und dem ersten Scanner.

Die bevorzugten Ausführungsformen betreffen ferner ein Verfahren, eine Schnittstelle zwischen einem ersten Anwendungsprogramm und einem ersten Scanner zu schaffen, wobei das erste Anwendungsprogramm auf einem mit dem ersten Scanner gekoppelten ersten Computer abläuft. Das Verfahren umfasst die folgenden Schritte: Initialisieren eines ersten Scanvorgangs eines ersten Dokuments am ersten Scanner gesteuert durch das erste Anwendungsprogramm; Empfangen von durch den ersten Scanvorgang erzeugten ersten Bilddaten, während der Scanvorgang abläuft; Empfangen von ersten Statusdaten vom ersten Scanner, während der Scanvorgang abläuft; Zuführen der ersten Bilddaten und der ersten Statusdaten an das erste Anwendungsprogramm, während der erste Scanvorgang abläuft, und Anpassen des ersten Scanvorgangs, während der Scanvorgang abläuft.

Die Merkmale der vorliegenden Erfindung werden in der folgenden Beschreibung bevorzugter Ausführungsformen in Zusammenhang mit den beigefügten, nachfolgend aufgeführten Zeichnungen näher erläutert.

Es zeigen:
- Fig. 1: ein Flussdiagramm, in dem ein bevorzugter Workflow für den Auflagendruck dargestellt ist,
- Fig. 2: ein Flussdiagramm, in dem die verschiedenen Funktionalitäten der bevorzugten Ausführungsform des Workflows dargestellt sind,
- Fig. 3: ein Blockdiagramm einer ersten Ausführungsform einer Scanner-Schnittstelle,
- Fig. 4: ein Blockdiagramm einer zweiten Ausführungsform einer Scanner-Schnittstelle.

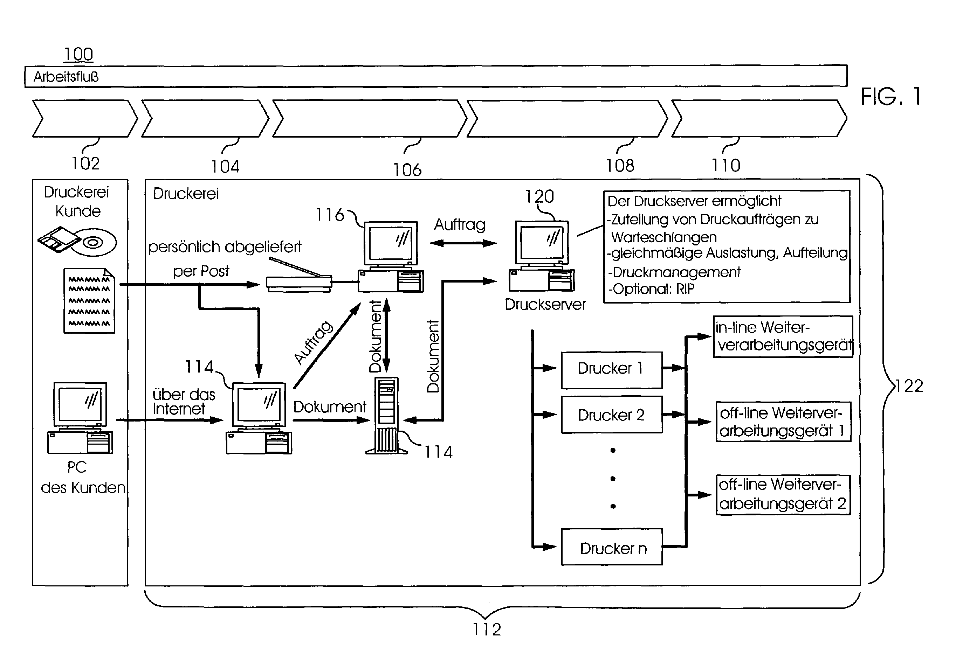

In Fig. 1 ist ein Flussdiagramm des Produktions-Workflows 100 in einer typischen Druckerei für den Auflagendruck dargestellt. Ein Workflow enthält die Aufgaben, Prozessschritte, betroffenen Organisationen oder Personen, Informationen zu den Eingaben und der gewünschten Ausgabe sowie die benötigten Tools für jeden Schritt eines Geschäftsvorgangs. Wie nachfolgend erläutert wird, kann der Workflow-Ansatz zur Analyse und Durchführung eines Geschäftsvorgangs wie dem Auflagendruck mit einem objektorientierten Ansatz kombiniert werden, der sich auf die einzelnen zugehörigen Objekte und Prozesse wie Dokumente, Seiten, Daten und Datenbanken konzentriert. Die Bezeichnung "objektorientiert", wie sie im Sinne der vorliegenden Anmeldung im Zusammenhang mit den beschriebenen Ausführungsformen verwendet wird, bedeutet nicht, dass ein objektorientierter Programmierungsansatz die einzige Möglichkeit zur Umsetzung der beschriebenen Ausführungsformen bildet.

Fig. 1 zeigt ein typisches Computernetzwerk 112 in einer Druckerei, insbesondere in einer Digitaldruckerei, das Computer-Workstations 114, 116, Server 118, 120 und Hochgeschwindigkeits-Ausgabegeräte 122 einschließt. Die Server 118, 120 umfassen Netzwerk-Server 118 und Druckserver 120. Die Topologie des Netzwerks 112 ist in der Regel in seiner Struktur an den Workflow 100 der Druckerei angepasst. Das Netzwerk kann z. B. als ein verkabeltes oder kabelloses Ethernet oder als eine beliebige andere Form eines lokalen Netzwerks (local area network, LAN) ausgebildet sein. Weiterhin kann das Netzwerk 112 über Kabelverbindungen oder kabellose Verbindungen zu größeren Netzwerken, z. B. zum Internet, oder über ein virtuelles privates Netzwerk zu anderen LAN verfügen.

Der Produktions-Workflow 100 umfasst die Prozessschritte des Auftragsbeginns 102, des Auftragseingangs 104, der Auftragsbearbeitung 106, der Druckproduktion 108 und der Auftragsvollendung 110. Mehrere dieser Prozessschritte können kombiniert werden, oder es können weitere Prozessschritte vorgesehen sein. Am Auftragsbeginn 102 geht der Auftrag in Form einer Vorlage und Anweisungen ein; diese Informationen zusammen bilden den Druckauftrag oder Job. Dabei liefert der betreffende Kunde den Druckauftrag oder Job persönlich in Papierform oder in elektronischer Form in der Druckerei ab oder übermittelt ihn per Telefon, Fax, Post, E-Mail oder über ein Netzwerk, z. B. das Internet. Ein Druckauftrag oder Job kann mehrere Dokumente und mehrere Anweisungsfolgen umfassen, z. B. auch mehrere Dokumente, die jeweils ein Kapitel eines Buchs darstellen, und ein Dokument für den Bucheinband. Dieser beispielhafte Druckauftrag kann weiterhin die Anweisungsfolge zur Herstellung des Buchs aus den einzelnen Kapiteln und eine Anweisungsfolge zur Herstellung des Einbands umfassen. Wie im Folgenden erläutert wird, kann weiterhin eine dritte Anweisungsfolge vorliegen, die das Zusammenfügen von Buch und Einband betrifft.

Bei Auftragseingang 104 erhält die Druckerei den Druckauftrag, der nun in das Produktionssystem oder den Workflow der Druckerei eingegliedert wird. Die Anweisungen des Kunden sind in der Regel auf einem besonderen Formular aufgeführt, das als Auftragsbeschreibung oder "Job Ticket" bezeichnet wird. Dieses Ticket kann auch elektronisch erstellt worden sein und in elektronischer Form vorliegen. Für Standard-Anweisungen können vorgefertigte Job Tickets vorgesehen sein. Eine Druckerei kann z. B. vorgefertigte Job Tickets bereithalten, die Anweisungen für das Vervielfältigen von Dokumenten, deren Lochung mit drei Löchern und deren anschließendes Zusammenfügen durch Dreiring-Bindung enthalten. Wenn ein derartiger Auftrag häufig nachgefragt wird, können solch vorgefertigte Job Tickets Zeit und Aufwand sparen, da der Druckereiangestellte, der den Auftrag entgegennimmt, nur kundenspezifische Details (z. B. die Auflagenhöhe) auf dem Formular vermerken muss. Vorgefertigte Job Tickets können also zur Standardisierung der Auftragsabwicklung und zur Fehlervermeidung beitragen. In einer besonders einfachen Form kann der Auftragseingang 104 nur darin bestehen, dass die Vorlagendokumente zusammen mit den Auftragsanweisungen eingehen, ein Job Ticket erstellt wird und der Druckauftrag in einen Ordner einsortiert und bis zu seiner Bearbeitung in nachfolgenden Prozessschritten abgelegt wird.

In Druckereien, die Druckaufträge elektronisch abwickeln, wird im Rahmen des Auftragseingangs 104 der Auftrag in das elektronische Produktionssystem der Druckerei eingegeben. Wurde die Vorlage in Papierform geliefert, so muss sie zunächst elektronisch in das Computersystem der Druckerei eingelesen werden. Bei in elektronischer Form vorliegenden Vorlagen müssen die Vorlagendateien im Computersystem der Druckerei gespeichert werden.

Für den Auftragseingang 104 umfasst das Netzwerk 112 mindestens eine Kundenbereichs-Workstation 114, die sich im Auftragsannahme-Bereich der Druckerei oder am Arbeitsplatz eines Druckereiangestellten befindet oder aber zur Selbstbedienung für den Kunden aufgestellt wurde. Diese Workstations 114 werden für den Auftragseingang 104 verwendet und können in der Regel die verschiedensten Arten elektronischer Medien verarbeiten, z. B. Disketten, CD ROMs, Bänder etc, und/oder sie können Aufträge über das Internet oder eine andere Art von Netzwerkverbindung mit dem Kunden empfangen. Außerdem sind diese Workstations 114 in der Regel für die verschiedensten Dateiformate geeignet, z. B. die Formate der Microsoft-Office™-Produktfamilie, die von der Microsoft Corporation mit Sitz in Redmond, Washington hergestellt werden, sowie die Dateiformate anderer Desktop-Publishing-Programme wie Aldus Pagemaker™ oder QuarkXpress™ der Firma Quark Inc. in Denver, Colorado. Weiterhin sollten diese Workstations 114 auch zur Bearbeitung von "druckfertigen" Dateiformaten wie Portable Document Format™ (PDF-Dateien), Postscript™ (PS-Dateien), beide von der Firma Adobe Systems, Inc. in San Jose, Kalifornien oder Printer Control Language (PCL-Dateien) der Firma Hewlett Packard in Palo Alto, Kalifornien geeignet sein, die im Folgenden behandelt werden. Darüber hinaus sind die Workstations 114 vorzugsweise auch für Bilddateien z. B. im Tagged Image File Format (TIFF-Dateien), im Bitmap Format (BMP-Dateien) und/oder für PCX-Dateien geeignet. Die Workstations 114 können auch einen Scanner 116 umfassen, mittels dessen Vorlagen in Papierform in das Computersystem eingelesen werden können. Da Scanner jedoch kompliziert in der Handhabung sind, befinden sie sich in vielen Druckereien eher im Bereich der Auftragsbearbeitung 106 und werden nur von geschultem Fachpersonal bedient, wie im Folgenden näher erläutert wird. Die Workstations 114 dienen ferner zur Ausarbeitung eines Job Tickets in Papierform oder in elektronischer Form, das sämtliche Anweisungen zur Durchführung des Druckauftrags beinhaltet. Die Erstellung des Job Tickets kann automatisch, z. B. anhand von vorgefertigten Tickets, oder manuell erfolgen oder eine Kombination aus automatischen und manuellen Schritten vorsehen.

Die Auftragsbearbeitung 106 umfasst das Bearbeiten der Dokumente für den Druckvorgang auf der Basis der im Ticket aufgeführten Anweisungen. In Papierform vorliegende Dokumente werden im Rahmen der Auftragsbearbeitung 106 zur Erzeugung einer sinngetreuen und fehlerfreien elektronischen Wiedergabe zunächst gescannt. Sobald die Dokumente in elektronischer Form vorliegen, müssen sie in ein Dateiformat gebracht werden, in dem sie sowohl editiert als auch gedruckt werden können. Dadurch wird vermieden, dass die Druckereiangestellten mit verschiedenen Programmen arbeiten müssen. Außerdem müssen komplexe Dokumente nicht erst aus unterschiedlichen elektronischen Dateiformaten zusammengefügt werden.

Ein Kunde kann z. B. zwei verschiedene Dokumente liefern, von denen eines den Inhalt eines Buches und das andere Fotos beinhaltet, die an bestimmten Stellen in das Buch eingefügt werden sollen. Das zusammengestellte Buch soll schließlich möglicherweise mit fortlaufenden Seitenzahlen versehen werden. Der Inhalt des Buchs kann z. B. als Microsoft-Word™-Datei vorliegen, während die Bilder möglicherweise als Adobe-Photoshop™-Datei gespeichert sind. Es ist zwar mittels der beiden Softwarepakete möglich, zu ermitteln, auf welchen Seiten die Fotos eingefügt werden sollen, und eine entsprechende Seitennummerierung einzufügen, dies ist jedoch ein zeitaufwändiger und komplizierter Vorgang. Hierzu muss der Bearbeiter mit vielen unterschiedlichen Softwarepaketen vertraut sein, und es besteht immer die Gefahr, dass er mit einer vom Kunden gewählten bestimmten Software nicht umgehen kann. Daher ist es effizienter, jedes der vorliegenden Dateiformate in ein einheitliches Format zu bringen, welches es dem Bearbeiter ermöglicht, den Druckauftrag mittels einer einzigen Software-Schnittstelle zu bearbeiten. In den bevorzugten Ausführungsformen der Erfindung werden alle Dokumente unabhängig davon, ob sie in Papierform oder elektronischer Form vorliegen, in ein "druckfertiges" Dateiformat konvertiert. Hierzu wird vorzugsweise das PDF- Format verwendet.

Ein druckfertiges Dateiformat ist hier definiert als ein Dateiformat, das sowohl die zu druckenden Daten als auch die Steuerungsanweisungen für den Drucker enthält, die direkt vom internen Prozessor eines Druckers (oder eines anderen Geräts zur Ausgabe von Dokumenten in Papierform oder auf einem sonstigen Ausgabemedium) interpretiert werden können, so dass die Daten in gerasterter Form auf das Ausgabemedium gebracht werden. Bei der Rasterung werden Bilddaten an einer bestimmten Stelle auf dem Ausgabemedium positioniert. Derartige Dateiformate sind z. B. PDF-Dateien, PS-Dateien sowie PCL-Dateien. Als nicht druckfertig gelten die meisten mit Hilfe von Anwendungsprogrammen für Personalcomputer erstellten Dateien, z. B. Microsoft-Word™-Dateien. Diese Dateien müssen zunächst in ein druckfertiges Dateiformat gebracht werden, bevor sie gedruckt werden können.

Weiterhin gibt es Bilddatei-Formate, z. B. TIFF-Dateien, die zwar Bilddatenbits enthalten, deren Format bereits ihre Ausgabestelle auf dem Ausgabemedium definiert, aber keine Druckersteuerungsinformationen, die vom internen Prozessor des Druckers interpretiert werden können. Diese Dateiformate gelten im Sinne dieser Anmeldung nicht als druckfertige Dateiformate. Durch die Verwendung eines druckfertigen Dateiformats kann die Rasterung der Bilddaten so weit wie möglich, fast bis unmittelbar vor dem Aufdrucken der Bilddaten auf das Ausgabemedium hinausgezögert werden. Dies ermöglicht eine optimale Ausnutzung des Hochleistungsdruckers 122, indem der Rasterungsvorgang durch die interne Steuerungslogik des Hochleistungsdruckers 122 optimiert werden kann. Dadurch ist am ehesten gewährleistet, dass das fertige Produkt den Erwartungen des Bearbeiters entspricht.

Für die Auftragsbearbeitung 106 umfasst das Computer-Netzwerk 112 Bearbeitungsstationen 116 und Netzwerk-Server 118, die mit den Workstations 114 im Bereich der Auftragsannahme vernetzt, d. h. direkt oder indirekt über eine Zwischenkomponente oder mehrere Zwischenkomponenten mit diesen verbunden sind. Derartige Zwischenkomponenten können sowohl als Hardware- als auch als Software-Komponenten ausgebildet sein. Die Bearbeitungsstationen 116 führen vorzugsweise eine Workflow-Management-Software aus, die, wie nachfolgend näher beschrieben ist, das Bearbeiten, Editieren und Drucken von Druckaufträgen ermöglicht. Der/die Netzwerkserver 118 umfasst/umfassen eine Dokumentenbibliothek, die ein Manipulieren, Bearbeiten und Archivieren von Druckaufträgen bzw. von zu einem Druckauftrag gehörigen Dokumenten und/oder Tickets ermöglicht. Außerdem erleichtert und überwacht der Netzwerkserver 118 den Datenfluss von den Workstations 114 im Auftragsannahme-Bereich zu den Bearbeitungsstationen 116 und von dort zu den Druckservern 120 oder den Ausgabegeräten 122. Beispiele für Dokumentbibliotheken sind das Dokumentenmanagementsystem Intra.Doc von Intranet Solutions, Inc. in Eden Prairie, Minnesota, sowie das Dokumentenmanagementsystem DOCFusion von Hummingbird, Inc. in York, Ontario, Canada. In einer bevorzugten Ausführungsform sind die Bearbeitungsstationen 116 als Imagesmart-Workstations von Heidelberg Digital, L.L.C. in Rochester, New York ausgebildet. Alternativ kann auch eine geeignete ComputerHardware-Plattform verwendet werden, die z. B. einen Prozessor der Pentium Reihe der Firma Intel Corporation, Santa Clara, Kalifornien oder einen besseren Prozessor mit wenigstens 64 MB RAM, mindestens einer 20 Gigabyte Hard Disk und ein geeignetes Display umfassen. Die Netzwerk-Server 118 arbeiten weiterhin vorzugsweise mit einem Open Document Management Architecture (ODMA) Standard und bieten Möglichkeiten des Dokumentmanagements und des Speicherns mit Skalieroptionen.

Durch die Bearbeitungsstationen 116 hat die Druckerei ferner die Möglichkeit, die Qualität des Produktionsprozesses zu erhöhen, indem dem Kunden Zusatzleistungen angeboten werden. An den vom Kunden gelieferten Vorlagen können z. B. Veränderungen vorgenommen werden, die der Kunde selbst nicht vornehmen konnte oder wollte. Dazu gehören z. B. das Einfügen von Seitenzahlen über mehrere Einzeldokumente, das Hinzufügen von Bates-Nummern, die Anpassung des Seitenlayouts für Registerblätter und das Ausrichten der ausgegebenen Produkte für den Bindevorgang. Außerdem bieten die Bearbeitungsstationen 116 die Möglichkeit der Fehlerbehebung in der Vorlage, wenn z. B. fehlerhafte Bildstellen eines gescannten Dokuments sowie überflüssige Textstellen oder Flecken entfernt werden sollen. Die Bearbeitungsstationen 116 können auch dazu dienen, Ungenauigkeiten in den fertigen Produkten zu verhindern, die z. B. beim Binden entstehen, wenn eine Broschüre oder ein Prospekt mittels Signatur-Ausschießens hergestellt wird und beim Positionieren der Bilder auf dem Papier die Dicke der Bindung in Abhängigkeit von der Seitenzahl des Produkts nicht berücksichtigt wurde, insbesondere bei Falzbogensets, so dass sich das Bild auf den Seiten nach innen verschiebt, je näher es sich am Einband befindet. Dieses Phänomen kann verhindert werden, indem man die Bilder beim Ausschießen der Signaturen des Dokuments entsprechend geringfügig verschiebt. Eine weitere Funktion der Bearbeitungsstation 116 ist die Gestaltung des Layouts der Dokumentenseiten für die Endausgabe. Außerdem können die Seiten des Dokuments beliebig verschoben und vertauscht werden, es können Leerseiten eingefügt werden, die Seiten können verkleinert und verschoben werden, es können Druckbogen erzeugt werden und es können mehrere Seiten auf einem Ausgabebogen positioniert werden, um z. B. Proofs, Broschüren oder Prospekte herzustellen. Weiterhin ermöglicht es die Bearbeitungsstation 116 dem Bearbeiter, dem Dokument Anmerkungen wie Bates-Nummern, Seitenzahlen, Logos und Wasserzeichen hinzuzufügen. Alle diese Leistungen bedeuten einen Mehrwert für das fertige Produkt. Formatierungen und andere Veränderungen (z. B. die Verschiebung eines Seitenrands) können auf das gesamte Dokument angewandt werden oder nur auf einzelne Seiten. Derartige Veränderungen am Dokument werden als Dokument-/Seiteneigenschaften oder -attribute oder aber auch als Ausnahmen bezeichnet, da sie in der Regel bestimmte Einstellungen der ursprünglichen, vom Kunden vorbereiteten Formatierung des Dokuments umstoßen.

Die nächste Stufe des Druckproduktions-Workflows 100 ist die eigentliche Druckproduktion 108, in der die endgültige Form der zu druckenden Dokumente an den Druckserver 120 und von diesem an das Ausgabegerät 122 weitergeleitet wird. In kleineren Druckereien kann dies ein Angestellter erledigen, der den druckfertigen Auftrag nimmt und zum gewünschten Ausgabegerät 122 bringt, um den Druckauftrag zu starten. In dieser Stufe werden die verschiedenen Ausgabemöglichkeiten der Druckerei ausgenutzt. Z. B. werden Druckaufträge in die Warteschlange der gewünschten Ausgabegeräte 122 gestellt, Druckaufträge freien Geräten 122 zugewiesen, die Auslastung der unterschiedlichen Geräte 122 ausgeglichen, sowie weitere vorbereitende Schritte durchgeführt, z. B. die Aufteilung eines Druckauftrags oder dessen Bearbeitung mittels eines Raster Image Prozessors (RIP). Ein RIP ist die Hardware und/oder Software, die druckfertige Daten in gerasterte Bilder umwandelt, die auf ein Ausgabemedium gedruckt werden.

Der für die Druckproduktion 108 verwendete Druckserver 120 ist mit den Bearbeitungsstationen 116 und dem Netzwerk-Server 118 über das Netzwerk 112 verbunden. Außerdem ist der Druckserver 120 mit den verschiedenen Ausgabegeräten 122 der Druckerei verbunden. Bei manchen Ausgabegeräten 122 ist eine elektronische Übertragung der auszugebenden Daten unter Umständen nicht möglich, so dass ein manueller Schritt erfolgen muss. Dies ist z. B. bei besonderen Bindegeräten der Fall, bei denen die halbfertigen Dokumente von Hand in das Bindegerät eingelegt werden müssen, um den Produktionsvorgang abzuschließen. Der Druckserver 120 ist vorzugsweise als ein separater Computer ausgebildet, der in das Netzwerk 112 integriert ist. Es können jedoch auch Druckserver in Form von auf einem Netzwerk-Server 118, einer Bearbeitungsstation 116 oder einer Workstation 114 im Bereich der Auftragsannahme ablaufender Software verwendet werden. In der bevorzugten Ausführungsform umfasst der Druckserver 120 eine unabhängige Computer-Workstation mit einem Betriebssystem wie UNIX oder Windows NT, einem Software-Druckserver und einer Software-Druckserver-Anwendung. Die Druckserver-Anwendung dient als Bediener-Schnittstelle zur Konfiguration und Steuerung des Druckserverbetriebs. Das Druckservermedium führt die automatisierten Prozesse des Druckservers aus. Diese Prozesse umfassen das Spooling (SPOOL = Simultaneous Peripheral Operations On Line) von Druckaufträgen und deren Inhalt (d. h. das Dokument), die Zuweisung von Druckaufträgen zu Warteschlangen (Queuing), das Zuordnen von Druckaufträgen zum geeigneten Ausgabegerät auf der Basis der Eigenschaften des Druckauftrags und des jeweiligen Geräts, die gleichmäßige Verteilung der Druckaufträge auf die verschiedenen Ausgabegeräte zur besseren Auslastung der Drucker, wobei z. B. Farbdruckaufträge von Schwarzweiß-Druckaufträgen getrennt werden, sowie die Funktion als Kommunikationspfad, indem eingehende Kommunikations- und Druckprotokolle empfangen werden und in Kommunikations- und Druckprotokolle konvertiert werden, die das Ausgabegerät 122 versteht.

Die letzte Stufe des Druckproduktions-Workflows 100 ist die Auftragsvollendung 110, bei der mittels des Hochleistungs-Ausgabegeräts 122 das fertige Produkt hergestellt wird. Ein Hochleistungs-Ausgabegerät 122 ist ein Computer-Ausgabegerät, z. B. ein Digimaster™ Digital High Volume Printer der Firma Heidelberg Digital, L.L.C. oder der NexPress Farbdrucker der Firma NexPress in Rochester, New York, das in der Lage ist, große Mengen von Dokumenten mit beliebigem Inhalt und verschiedenen Stufen der Weiterverarbeitung (z. B. heften oder binden) mit hoher Geschwindigkeit zu produzieren.

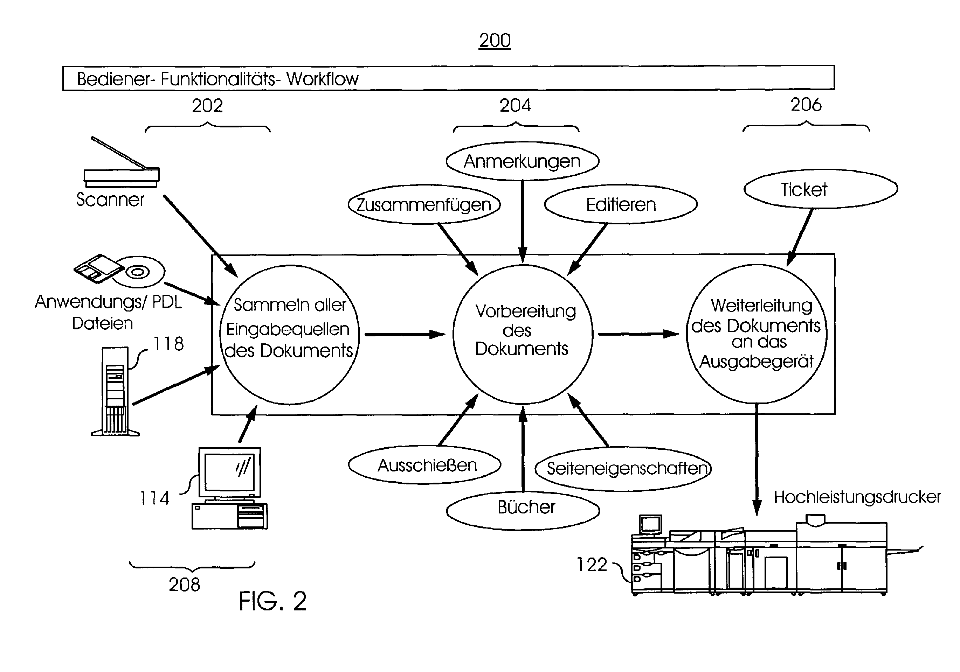

In Fig. 2 ist ein Flussdiagramm gezeigt, das den Bediener -Workflow 200 einer bevorzugten Ausführungsform des Auftragseingangs 104 und der Auftragsbearbeitung 106 darstellt. Der Bediener-Workflow 200 umfasst ein Eingabestadium 202, eine Vorbereitungsphase 204 und ein Produktionsstadium 206. Im Eingabestadium 202 werden alle Dokumente des Druckauftrags von den unterschiedlichen Eingabequellen 208 gesammelt. Wie bereits erläutert, werden die gesammelten Dokumente in ein druckfertiges Format, vorzugsweise PDF, gebracht. Diese Konvertierung kann manuell oder automatisch oder als eine Kombination aus manuellen und automatischen Schritten erfolgen. Dabei kann z. B. der Druckereiangestellte, der die Dokumente vom Kunden entgegennimmt und in die Workstation 114 im Bereich der Auftragsannahme eingibt, ein spezielles Verzeichnis auf dem Netzwerkserver 118 erstellen, in das Dateien verschiedener Formate gestellt werden. Eine automatisierte Logik, die dieses Verzeichnis überwacht, erkennt, dass Dateien in diesem Verzeichnis gespeichert werden und konvertiert sie automatisch in ein druckfertiges Format (oder markiert sie zur manuellen Konvertierung). Dokumente, die nicht automatisch von dieser Logik konvertiert werden können, können zur manuellen Konvertierung gekennzeichnet werden. Die konvertierten Dokumente werden anschließend an die Vorbereitungsphase 204 geleitet, wo sie für den Auflagendruck aufbereitet werden. Diese Weiterleitung kann ebenfalls dadurch erfolgen, dass die Dokumente in ein gesondertes Verzeichnis auf dem Netzwerk-Server 118 gestellt werden, das über die Bearbeitungsstationen 116 zugänglich ist, oder dadurch, dass die Dokumente direkt an die Bearbeitungsstation 116 übermittelt werden. Dieser Vorgang kann automatisch oder manuell erfolgen und kann vorsehen, dass die Dokumente bis zu ihrer Bearbeitung in eine Warteschlange gestellt werden. Dieser Prozess kann auch eine manuelle oder automatische Bestimmung der Fähigkeiten und des Kenntnis- oder Ausbildungsstands sowie die aktuelle Arbeitsbelastung und die in der Warteschleife anstehenden Druckaufträge der Druckereiangestellten, die gegenwärtig in die verfügbaren Bearbeitungsstationen 116 eingeloggt sind, einschließen. Unter Berücksichtigung dieser Aspekte kann der Druckauftrag automatisch oder manuell an den Angestellten geleitet werden, der sowohl technisch als auch auslastungsbedingt am ehesten in der Lage ist, den Auftrag zu bearbeiten. Diese Funktion kann durch eine Datenbank umgesetzt werden, in der die Fähigkeiten, den Kenntnis- und Ausbildungsstand der Angestellten der Druckerei gespeichert sind. Diese Datenbank kann mit einer Queue-Management-Software gekoppelt werden, welche die Auslastung der einzelnen Bearbeitungsstationen 116 ausgleicht.

In der Vorbereitungsphase 204 können die Dokumente z. B. zu einem Buch zusammengefasst, mit Anmerkungen versehen, editiert und ausgeschossen werden. Es können auch andere Seiteneigenschaften hinzugefügt werden. Sobald die Dokumente druckreif sind, treten sie in das Produktionsstadium 206 ein, in dem die vorbereiteten Dokumente zusammen mit den Produktionsanweisungen (aus den Tickets) an den Druckserver oder mittels einer Einrichtung zum Download von Dateien, z. B. das Anwendungsprogramm "Print File Downloader™" der Firma Heidelberg Digital, L.L.C, direkt an das Hochleistungs-Ausgabegerät 122 weitergeleitet werden. Dieser Bediener-Funktionalitäts-Workflow 200 kann als eine Kombination aus Hardware, Software und manuellen Schritten umgesetzt werden und kann eine oder mehrere der bereits im Zusammenhang mit dem Druckproduktions-Workflow erläuterten Komponenten einschließen.

Wenn ein Druckauftrag in Papierform in die Druckerei gelangt, muss er zunächst auf die beschriebene Weise in das Computersystem der Druckerei eingelesen werden. Dieser Scanvorgang erfolgt im Rahmen des Druckerei-Workflows beim Auftragseingang 104 oder bei der Auftragsbearbeitung 106. In der Regel wird das Dokument in einen automatischen Papiereinzug eines Hochleistungs-Scanners 124 eingelegt, der mit der Auftragsbearbeitungs-Workstation 116 (dem sog. Scanner Host oder der Scanner Host Workstation) verbunden ist. In der bevorzugten Ausführungsform handelt es sich bei dem Hochleistungs-Scanner 124 um einen ImageDirect Scanner der Firma Heidelberg Digital, L.L.C. in Rochester, New York. Dann initiiert und steuert der Bediener den Scanvorgang von der mit dem Scanner 124 verbundenen Auftragsbearbeitungs-Workstation 116 aus. Der Bediener kann mittels eines auf der Auftragsbearbeitungs-Workstation 116 gespeicherten Scanner-Anwendungsprogramms auf den Scanner 124 einwirken. Die Scanner-Anwendung ist in der Lage, Scannerparameter festzulegen, den Scanvorgang zu starten und zu steuern sowie die Ergebnisse des Scanvorgangs anzuzeigen. Die Scanneranwendung ist in der Regel ein Computerprogramm, das nicht vom Hersteller des Scanners 124 oder der Auftragsbearbeitungs-Workstation 116 verfasst wurde. Ein möglicher Hersteller eines derartigen Programms ist z. B. Adobe Systems.

Auf einem Computer-Workstation ausgeführte Anwendungsprogramme verfügen bekanntermaßen über Schnittstellenprogramme zu mit der Workstation verbundener externer Hardware, sog. Treiber. Ein Treiber dient als eine Art Übersetzer für das jeweilige Gerät und die Programme, welche auf das Gerät zugreifen. Jedes mit einem Computer verbundene Gerät verfügt in der Regel über eine eigene Reihe von speziellen Befehlen, die nur dem jeweiligen Treiber bekannt sind. Die meisten Anwendungsprogramme dagegen können nur mittels generischer Befehle auf diese Geräte zugreifen. Der Treiber empfängt demgemäß generische Befehle vom Anwendungsprogramm und übersetzt diese in speziell auf das Gerät zugeschnittene Befehle. Im Wesentlichen verläuft der Pfad von dem Bedienersystem und quasi der gesamten Hardware, die sich nicht direkt auf dem Motherboard des Computers befindet, über diese speziellen Treiberprogramme. Die Funktion eines Treibers besteht darin, zwischen den elektrischen Signalen der Hardware-Teilsysteme und den komplizierten Programmiersprachen des Betriebssystems und der Anwendungsprogramme zu vermitteln. Treiber übersetzen z. B. Daten, die das Betriebssystem als eine Datei definiert hat, in Bitströme, die an bestimmten Stellen auf Speichermedien abgelegt werden, oder in eine Serie von Laserimpulsen in einem Drucker. Aufgrund der großen Vielfalt von treibergesteuerter Hardware gibt es deutlich unterschiedliche Funktionsweisen der Treiberprogramme. Die meisten Treiber werden jedoch aufgerufen, wenn das Gerät benötigt wird, und funktionieren ähnlich wie jeder andere Vorgang. Das Betriebssystem weist Treibern häufig Speicherblöcke mit hoher Priorität zu, so dass die Hardwarequelle so schnell wie möglich zur weiteren Verwendung aufgerufen und bereitgestellt werden kann. Ein Grund dafür, dass Treiber vom Betriebssystem getrennt sind, besteht darin, dass dem Treiber (und damit den Hardware-Teilsystemen) neue Funktionen hinzugefügt werden können, ohne dass das Betriebssystem selbst verändert, neu kompiliert und verteilt werden muss. Durch die Entwicklung neuer Hardwaregeräte-Treiber - die häufig von dem Hersteller der Teilsysteme durchgeführt oder bezahlt werden und nicht vom Hersteller des Betriebssystems - können die Eingabe-/Ausgabemöglichkeiten des gesamten Systems bedeutend verbessert werden.

Ein Beispiel für ein Treiberprogramm ist ein Druckertreiber, der es einem Anwendungsprogramm ermöglicht, ein Dokument direkt oder indirekt (z. B. über ein Netzwerk) auf einem mit der Workstation verbundenen Drucker zu drucken. Von unterschiedlichen Herstellern produzierte Drucker haben unterschiedliche Eigenschaften und verwenden unterschiedliche Befehle, die der jeweiligen Herstellerfirma gehören. Wie bereits erwähnt bietet ein Treiberprogramm eine Abstraktionsebene zwischen einem Anwendungsprogramm und den verschiedenen verfügbaren Druckern, so dass das Anwendungsprogramm nicht seine Fähigkeit bewahren muss, die unterschiedlichen verfügbaren Drucker verwenden zu können und nicht nachgerüstet werden muss, um später entwickelte Geräte handhaben zu können. Der Treiber liefert eine Standard-Softwareschnittstelle, mit der das Anwendungsprogramm interagieren kann. Dies wird in der Regel als Anwendungsprogrammschnittstelle bezeichnet. Der Treiber übersetzt dann die generischen Interaktionen in die gerätspezifischen Befehle, um das entsprechende Gerät zu steuern. Außerdem können Treiber auch als Benutzerschnittstellen zur Steuerung von verkäuferspezifischen Funktionen des betreffenden Geräts dienen. Ein Drucker, der z. B. die Duplexfunktion bietet, kann z. B. mittels eines Treibers angesteuert werden, der eine Benutzerschnittstelle liefert, welche dem Bediener die Möglichkeit bietet, die Duplexfunktion auszuwählen. Außerdem ist der Treiber derart programmiert, dass er die spezifische Hardware-Schnittstelle steuert, die das Gerät mit der Workstation verbindet. Bekannte Hardware-Schnittstellen dieser Art sind z. B. Small Computer System Interface (SCSI), Universal Serial Bus (USB), serielle oder parallele Schnittstellen und IEEE 1394 (FireWire). Wenn ein anderes Gerät angeschlossen wird, muss der Benutzer nur einen neuen Treiber installieren, damit das Anwendungsprogramm mit der neuen Hardware kommunizieren kann. Scanner 124 sind in der Regel über ein SCSI-Interface physisch mit der Auftragsbearbeitungs-Workstation 116 verbunden.

Es gibt im Wesentlichen zwei Arten von Scannertreibern: den von der TWAIN Group in Boulder Creek, Kalifornien definierten Treiber TWAIN sowie die von Pixel Translations, Inc. in San Jose, Kalifornien entwickelte Image and Scanner Interface Specification (ISIS), die auch durch das American National Standards Institute definiert ist (s. ANSI/AIIM MS61-1996). Treiber auf der Basis von TWAIN und ISIS liefern die für das Scannen von kleinen Dokumenten benötigte Basisfunktionalität, erweisen sich aber häufig als unzureichend für die Anforderungen des Scannens umfangreicher Dokumente, wie es in einer Druckerei durchgeführt wird. Hochleistungsscanner für Druckereien müssen in der Lage sein, mehrere umfangreiche Dokumente fortlaufend mit hoher Auflösung und Geschwindigkeit zu scannen, und dabei effiziente Möglichkeiten der Fehlererkennung,-behebung und -diagnose bieten. Außerdem müssen in einer Druckerei oftmals mehrere Scanner 124 verschiedener Hersteller auf effiziente Weise mit geringem Bedarf an Ressourcen gleichzeitig betrieben werden. Dies erfordert normalerweise, dass die Scanner 124 mit einer einzigen Auftragsbearbeitungsstation 116 verbunden sind und von einem einzigen Bediener bedient werden.

Treiber auf der Basis von TWAIN sind objektorientiert. Ein Druckauftrag oder Job ist definiert als eine Sammlung aller Scanattribute. Hierzu gehören z. B. die Scan- und Bildverarbeitungsattribute wie Bildauflösung und Bittiefe sowie die konstanten/scanner-unabhängigen Attribute wie einseitiges oder beidseitiges Drucken (Simplex- oder Duplexdruck) und scannerspezifische Attribute wie die Fähigkeit, Bar Codes zu lesen. TWAIN Treiber erstellen alle Auftragsparameter und starten dann den Scanvorgang. Danach können die Parameter nicht mehr geändert werden, bis der Scanvorgang beendet ist oder abgebrochen wird. Wenn also ein Parameter falsch eingestellt wurde, muss der Scanvorgang abgebrochen und völlig neu gestartet werden. Dies ist problematisch, wenn z. B. auf der zehnten Seite eines hundertseitigen Dokuments ein Fehler auftritt. In diesem Fall muss entweder der Scanvorgang vollständig durchgeführt werden, bis der Scanner 124 zur Behebung des Fehlers angepasst werden kann, oder der Scanvorgang muss abgebrochen, das Dokument neu eingelegt und der Scanvorgang neu gestartet werden. Beide Alternativen bedeuten einen erheblichen Zeitverlust.

Außerdem liefern TWAIN Treiber das gescannte Dokument Bild für Bild von der Scannerhardware-Schnittstelle an die Scananwendung. Das bedeutet, dass der Treiber für jedes Bild die Anwendung unterbrechen, eine Verbindung herstellen und die Daten vom der Hardware-Schnittstelle des Scanners an das Anwendungsprogramm übermitteln muss. Dies erzeugt unnötigen Overhead für das Anwendungsprogramm, insbesondere bei Umgebungen, in denen große Dokumente gescannt werden und bei denen eine einzige Scananwendung verschiedene gleichzeitig betriebene Scanner 124 steuert. Weiterhin unterstützen TWAIN Treiber zwar die Verbindung mehrerer Scanner mit derselben Workstation, jedoch nicht einen gleichzeitigen Betrieb mehrerer Scanner von derselben Workstation aus. Der Bediener muss für einen Scanvorgang einen bestimmten Scanner 124 auswählen und warten, bis der Scanvorgang beendet ist, bevor er einen neuen Scanner 124 auswählen kann.

ISIS Treiber sind gerät-/scannerspezifische Treiber, die keine Bedienerschnittstelle für den Scanner aufweisen. Stattdessen erfordern ISIS Treiber die Bereitstellung der Bedienerschnittstelle durch das Anwendungsprogramm. Der ISIS Standard bietet außerdem kein umfassendes Verfahren zur Definition von Scanaufträgen, wie es der TWAIN Standard aufgrund seiner Verwendung von durch den Bediener spezifizierbaren Attributen ermöglicht. Im Gegensatz zu TWAIN Schnittstellen ist bei der Verwendung von ISIS Schnittstellen keine Darstellung von scannerspezifischen Bedienerschnittstellen zur Einrichtung des Scanauftrags durch den Bediener möglich. Der ISIS Ansatz besteht darin, dass die Bedienerschnittstelle durch die Scananwendung bereitgestellt werden muss. Dieser Ansatz ist für Scananwendungen geeignet, die mit mehreren Arten von Scannern 124 kooperieren müssen, und bietet für die Verwendung dieser Scanner 124 eine konsistente Bedienerschnittstelle. ISIS ist nicht so stabil wie TWAIN im Hinblick auf ein umfassendes Verfahren zur Definition des Scanauftrags. Oft muss der Verkäufer des Scanners um Nachrüstungen der Anwendungsprogrammschnittstelle ersuchen, um die erforderliche Funktionalität durchzuführen. Nachdem die Anwendung die zum Starten eines Scanvorgangs für eine Reihe von in den automatischen Dokumenteneinzug des Scanners 124 eingelegten Vorlagen notwendige Kommunikation mit der ISIS Anwendungsprogrammschnittstelle beendet hat, nimmt der ISIS Treiber die gesamte Rechnerleistung des Hosts in Anspruch, bis das Dokument vollständig eingescannt ist. Schließlich unterstützen ISIS Treiber nicht den gleichzeitigen Betrieb mehrerer Scanner von einer Workstation aus. Für ISIS Treiber geschriebene Anwendungen gehen von der Annahme aus, dass sich auf dem Host nur ein Treiber befindet.

Sowohl TWAIN als auch ISIS Treiber bieten weiterhin nicht die Möglichkeit, Echtzeitinformationen an den Scannerhost-Workstationscomputer rückzumelden. Derartige Echtzeitinformationen oder Statusdaten umfassen Satusinformationen wie z. B. die Lampentemperatur oder die Einstellungen der Scannerparameter. Statusdaten umfassen weiterhin Informationen bezüglich Scanereignissen wie fehleingezogenes Papier oder Lampenversagen. Echtzeit bedeutet, dass die Statusdaten der Scananwendung rückgemeldet werden, während der Scanvorgang abläuft, und ohne dass abgewartet wird, bis der Scanvorgang abgeschlossen ist. Echtzeit wird vom Bediener als eine ausreichend schnelle Reaktionszeit des Computers empfunden und reicht aus, damit der Computer mit externen Prozessen Schritt halten kann (um z. B. Visualisierungen des sich ständig verändernden Wetters zu liefern).

Die vorliegenden Ausführungsformen beschreiben eine verbesserte Scannerschnittstellenlösung für Anwendungsentwickler, die in der vorliegenden Schrift als virtueller Scannertreiber bezeichnet wird. Die bevorzugten Ausführungsformen umfassen die Fähigkeit, dass eine einzige Anwendung unabhängig von der Marke des mit der Auftragsbearbeitungs-Workstation 116 verbundenen Scanners 124 mit einer einzelnen Anwendungsprogrammschnittstelle kommunizieren kann. Außerdem wird ein Personalitätsmodul bereitgestellt, dass die verkäuferspezifische Funktionalität des jeweiligen mit der Auftragsbearbeitungs-Workstation 116 verbundenen Scanners 124 einschließt. Das Personalitätsmodul dient als Schnittstelle zwischen der Anwendungsprogrammschnittstelle des virtuellen Scannertreibers und dem Scanner 124 und bietet drei Scanaspekte: das Kommunikationsverfahren mit dem Scanner 124 (USB, SCSI, seriell, parallel, FireWire etc.), das Ausgabeverfahren der vom Scanner 124 ausgegebenen Bilddaten und der Statusdaten und die erforderliche verbesserte Bildverarbeitung zusätzlich zu der vom Scanner 124 selbst gebotenen Bildverarbeitung.

Durch die Bereitstellung eines in der Auftragsbearbeitungs-Workstation 116 gespeicherten Personalitätsmodul für jeden mit der Workstation 116 verbundenen Scannertyp kann der virtuelle Scannertreiber automatisch das geeignete Personalitätsmodul verwenden, wenn er von der Scananwendung die Anweisung erhält, einen Scanvorgang an einem bestimmten Scanner 124 einzuleiten. Auf der Basis des vom Bediener gewählten Scanners 124 entscheidet der virtuelle Scannertreiber dynamisch, welches Personalitätsmodul er wählt.

Außerdem erleichtern oder ermöglichen der virtuelle Scannertreiber und das Personalitätsmodul Echtzeit-Kommunikation zwischen dem Scanner 124 und der Workstation 116; d. h. virtueller Scannertreiber und Personalitätsmodul ermöglichen es dem Scanner 124, Bild- und/oder Statusdaten an die Workstation 116 zu übermitteln und der Workstation 116, Befehle an den Scanner 124 zu übermitteln, während an diesem gerade ein Scanvorgang abläuft. Der virtuelle Scannertreiber liefert z. B. Echtzeit-Feedback von Statusdaten des Scanners 124, z. B. den Scannerstatus, Ereignisse und andere telemetrische Daten, die vom Scanner 124 geliefert werden. Diese Information wird geliefert, während der Scanvorgang abläuft und wenn der Scanvorgang vollendet ist. Diese Information kann vom Bediener dazu verwendet werden, die Scanparameter während des Scanvorgangs anzupassen, ohne dass der Scanvorgang unterbrochen oder neu gestartet werden muss. Dies ist dann von Vorteil, wenn die Scannerqualität langsam abnimmt, ohne dass bisher der Scanauftrag zu stark beeinträchtigt ist. In solchen Situationen kann eine Echtzeit-Anpassung, d. h. ein Befehl von der Workstation 116, unverzüglich die Scanqualität verbessern und der abnehmenden Scanqualität entgegenwirken, ohne dass der Scanvorgang unterbrochen oder neu gestartet werden muss. Weiterhin können z. B. diagnostische Anwendungen das vom virtuellen Scannertreiber gelieferte Echtzeit-Feedback zur Ermittlung von Hardware-Fehlfunktionen wie z. B. Lampenausfall verwenden. Automatische Scanqualitätsanwendungen können die Qualität des laufenden Scanvorgangs überwachen und automatische verschiedene Scannerparameter und Bildverarbeitungsalgorithemn verändern, um Qualitätsverluste auszugleichen, die z. B. durch Staub auf den Scannerglas oder durch aufgrund von fehleingezogenen Vorlagen verzerrte Bilder entstehen. Derartige Anwendungen können den Scanvorgang zusätzlich automatisieren und Bedienerfehler reduzieren, wodurch die Effizienz und der Durchlauf erhöht werden.

Außerdem liefert der virtuelle Scannertreiber Bilddaten an die Scananwendung, ohne dass jedes Bild einzeln an die Anwendung übermittelt wird. In den bevorzugten Ausführungsformen werden Bilddaten, die in der Regel aus einzelnen Bilddateien für jede gescannte Seite eines Dokuments bestehen, an einen Zwischenspeicher übertragen, auf den sowohl der virtuelle Scannertreiber als auch die Scananwendung zugreifen können und der sich vorzugsweise im Speichersystem der Auftragsvorbereitungs-Workstation 116 befindet. Dieser Zwischenspeicher kann sich im Random Access Memory, auf einer lokalen Festplatte oder einer Netzwerkfestplatte befinden. In den bevorzugten Ausführungsformen benutzt der virtuelle Scannertreiber einen Uniform Resource Locator, wie er von Hypertext Transfer Protocol spezifiziert ist, um ein einheitliches, allgemeingültiges Übertragungsverfahren auf Dateibasis zu gewährleisten, das unabhängig von der mit der Auftragsbearbeitungs-Workstation 116 verbundenen Gerätehardware ist. Es können auch andere bekannte Datenübertragungsprotokolle verwendet werden, darunter auch das File Transfer Protocol (FTP und TFTP) und das Network File System (NFS). Durch die Übertragung der Bilddaten in einen Zwischenspeicher ist die Scananwendung in der Lage, auf die Bilddaten asynchron zuzugreifen, wenn sie benötigt werden. Dies ermöglicht es der Scananwendung, auf effiziente Weise den gleichzeitigen Betrieb mehrerer Scanner von derselben Scananwendung und Auftragsbearbeitungs-Workstation 116 zu unterstützen. Außerdem ermöglicht dies dem virtuellen Scannertreiber, die Bilddatenübertragung im Wesentlichen mit der selben Geschwindigkeit wie den Scanvorgang durchzuführen, auch wenn mehrere Scanner 124 in Betrieb sind. Für den bevorzugten ImageDirect Scanner ist die Geschwindigkeit 65 Seiten pro Minute.

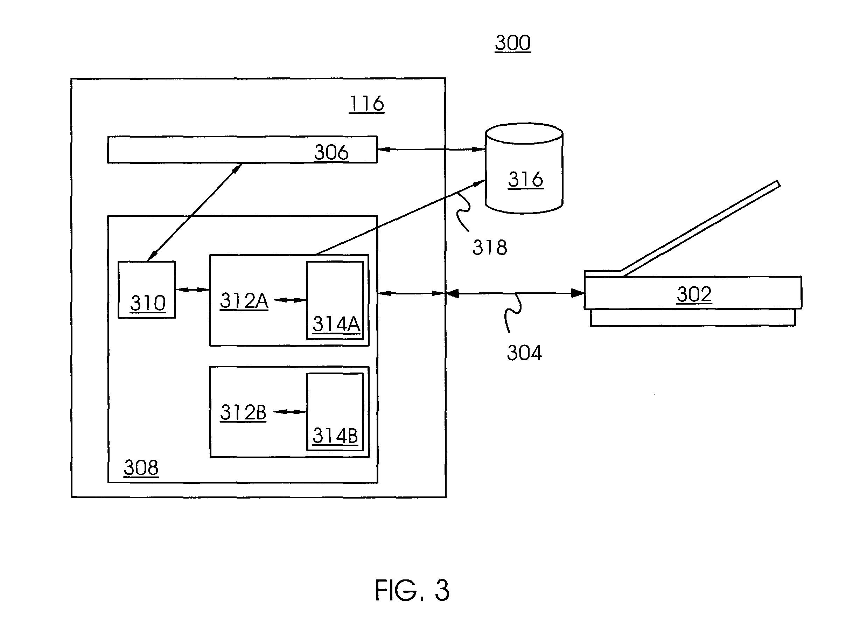

In Fig. 3 ist ein Blockdiagramm eines Hochleistungsscansystems gezeigt, das eine erste Ausführungsform eines virtuellen Scannertreibers 308 umfasst. Das System 300 umfasst eine Auftragsbearbeitungs-Workstation 116, einen Scanner 302, eine Scananwendung 306 und einen Zwischenspeicher 316. Die Auftragsbearbeitungs-Workstation 116 ist vorzugsweise eine Scan Host™ Station, wie sie von der Digimaster™ 9110 von Heidelberg Digital, L. L. C. in Rochester, New York verwendet wird. Alternativ kann eine geeignete Computerhardware-Plattform mit einem Pentium™ Class Prozessor oder einem besseren Prozessor mit mindestens 64 Magabyte RAM und einer 20 Gigabyte Festplatte und mit einem geeigneten Display verwendet werden, wie sie die Firma Intel in Santa Clara, Kalifornien herstellt. Bei dem Scanner 302 handelt es sich vorzugsweise um einen ImageDirect Scanner von Heidelberg Digital L. L. C. Der Scanner 302 ist mit der Auftragsbearbeitungs-Workstation 116 über eine Hardwareschnittstelle 304, vorzugsweise eine SCSI, verbunden. Alternativ kann es sich bei der Hardwareschnittstelle 304 um einen USB, ein FireWire oder um eine serielle oder parallele Schnittstelle handeln. Außerdem kann der Scanner 302 mit der Auftragsbearbeitungs-Workstation 116 über ein Netzwerk mit einem Ethernet oder einer vergleichbaren bekannten Netzwerkschnittstelle/-architektur verbunden sein. Die Hardwareschnittstelle 304 unterstützt vorzugsweise bidirektionale Kommunikationen mit hoher Bandbreite und hohem Durchlauf. Der Zwischenspeicher 316 ist vorzugsweise eine mit dem Dateisystem der Auftragsbearbeitungs-Workstation 116 verbundene Festplatte, die vorzugsweise physisch mit der Station 116 verbunden ist. In alternativen Ausführungsformen kann der Zwischenspeicher 316 als ein Random Access Memory, als ein mit dem Scanner 302 verbundenes Laufwerk oder ein Fernlaufwerk, z. B. ein Netzwerklaufwerk ausgebildet sein. Bevorzugt wird, dass das Betriebssystem der Auftragbearbeitungs-Workstation 116 den Zugriff auf den Zwischenspeicher 316 sowohl von der Scananwendung 306 als auch vom virtuellen Scannertreiber 308 ermöglicht.

Die Scananwendung 306 ist ein Softwareprogramm, das auf der Auftragsbearbeitungs-Workstation 116 abläuft und es einem Bediener ermöglicht, Scanaufträge zu initiieren und zu steuern sowie sich die Ergebnisse des Scanvorgangs anzeigen zu lassen und diese zu verändern, indem z. B. die erzeugten Bilder editiert werden oder die Ergebnisse des Scanvorgangs an einen Hochleistungsdrucker 122 gesandt werden. In den bevorzugten Ausführungsformen handelt es sich bei der Scananwendung 306 um die Scan Host™ Software, wie sie von der Digimaster 9110 verwendet wird. Das System 300 umfasst ferner den virtuellen Scannertreiber 308, der mit der Scananwendung 306 verbunden ist. Die Scananwendung 306 kommuniziert mit dem virtuellen Scannertreiber 308 auf bekannte Weise über die Anwendungsprogrammschnittstelle 310 des virtuellen Scannertreibers 308. Die Anwendungsprogrammschnittstelle 310 dient als konsistente, einheitliche Bedienerschnittstelle zu den verschiedenen Scannern 302, die von der Scananwendung 306 eingesetzt werden können. Der virtuelle Scannertreiber 308 umfasst ferner mindestens ein Personalitätsmodul 312A, B. Für jeden mit dem Auftragsbearbeitungs-Workstation 116 verbundenen oder verbindbaren Scanner 302 ist ein Personalitätsmodul 312A, B definiert.

Das Personalitätsmodul 312A, B überbrückt die Schnittstellenlücke zwischen der Anwendungsprogrammschnittstelle 310 und der Hardwareschnittstelle 304 zum Scanner 302. Das Personalitätsmodul 312A, B kennt die scannerspezifischen Attribute des jeweiligen Scanners 302 und übersetzt die generischen Befehle der Anwendungsprogrammschnittstelle 310 in die spezifischen Befehle, die der Scanner 302 versteht. Außerdem umfasst das Personalitätsmodul 312A, B die Hardwareschnittstellen 314A, B, die diese Befehle formatiert und über die jeweilige Hardwareschnittstelle 304 überträgt, die dazu dient, den Scanner 302 mit der Auftragsbearbeitungs-Workstation 116 zu verbinden. Das Personalitätsmodul 312A, B dient als die Kommunikationsschnittstelle zum Scanner 302, so dass die Scananwendung 306 diesen Aspekt nicht bieten muss. Dies umfasst das Einrichten und Aufrechterhalten der Kommunikation. Wie bereits beschrieben kann die Kommunikationsschnittstelle als eine SCSI, Fire Wire, Fibre Channel, oder USB oder aber auch eine serielle oder parallele Schnittstelle ausgebildet sein. Das Personalitätsmodul 312A, B bietet weiterhin eine direkte Schnittstelle 318 zu dem Zwischenspeicher 316. Dies ermöglicht es dem Personalitätsmodul 312A, B, Bilddaten vom Scanner 302 an den Zwischenspeicher 316 zu übermitteln, wo die Scananwendung 306 diese asynchron abrufen kann. Das Personalitätsmodul 312A, B ist zuständig für die Weiterleitung der gescannten Bilddaten an den Zielzwischenspeicher 316, bei dem es sich um einen lokal an der Auftragsbearbeitungs-Workstation 116 angeordneten Zwischenspeicher oder um einen weiter entfernt angeordneten Zwischenspeicher, z. B. ein Netzwerk-Laufwerk, handeln kann. Um die Bilddatenübertragung an einen weiter entfernt angeordneten Zwischenspeicher 316 zu ermöglichen, kann das Personalitätsmodul 312A, B eine Art von Dateisystemprotokoll, z. B. FTP oder NFS oder auch ein anderes Protokoll wie HTTP, verwenden. Schließlich identifiziert und bietet das Personalitätsmodul 312A, B Bildverarbeitungsmöglichkeiten, die der Scanner 302 selbst nicht unterstützt. Wenn eine bestimmte Bildverarbeitungsmöglichkeit am Scanner 302 nicht zur Verfügung steht, stellt das Personalitätsmodul 312A, B einen Softwareersatz bereit. Auf diese Weise kann der virtuelle Scannertreiber 308 eine Reihe von einheitlichen Eigenschaften für die Scananwendung 306 bereitstellen und ist nicht begrenzt durch die tatsächlich verfügbaren Eigenschaften des Scanners 302. Auf diese Weise ist der virtuelle Scannertreiber 308 logisch unterteilt in die gemeinsame Anwendungsprogrammschnittstelle 310, die als Schnittstelle zu der Scananwendung 306 dient, und das Personalitätsmodul 312A, B, das scanner-/verkäuferspezifische Schnittstellenattribute verkörpert. Wie bereits erläutert wurde, ist die Anwendungsprogrammschnittstelle 310 in der Lage, Befehle von der Scananwendung 306 zu erhalten und diese an das Personalitätsmodul 312A, B weiterzuleiten, und das Personalitätsmodul 312A, B ist in der Lage, diese Befehle an den Scanner 302 weiterzuleiten, während ein Scanvorgang abläuft und während Bild- oder Statusdaten vom Scanner 302 an das Personalitätsmodul 312A, B übertragen werden, welch letzteres diese Daten an den Zwischenspeicher 316 weiterleitet, wo sie zum späteren Abrufen durch die Scananwendung 306 abgelegt werden. Auf diese Weise wird die Echtzeit-Kommunikation zwischen dem Scanner 302 und der Scananwendung 306/der Workstation 116 erleichtert/ermöglicht.

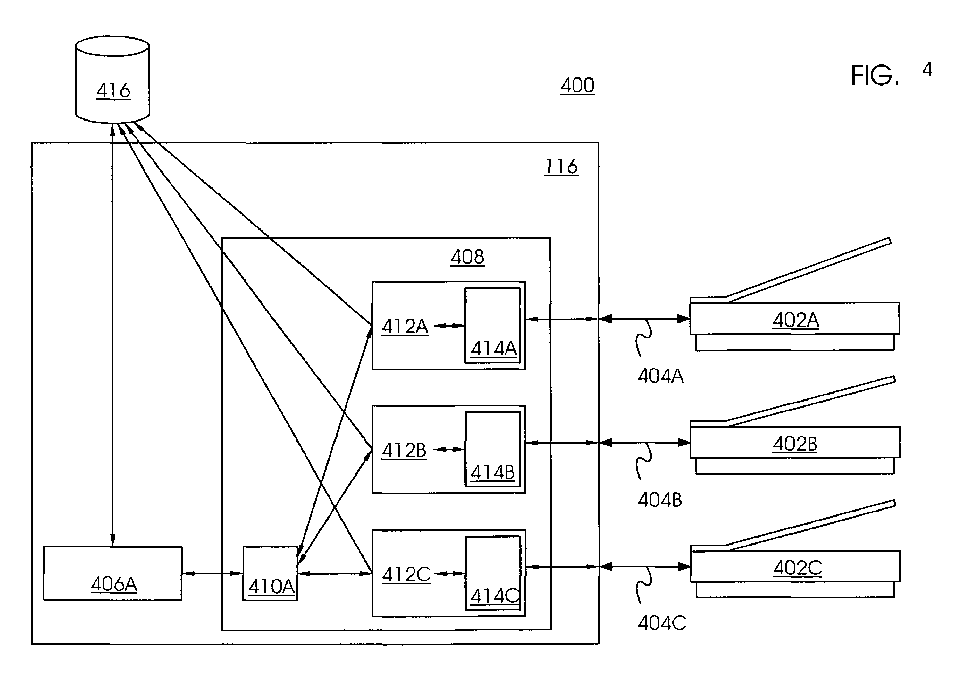

Fig. 4 zeigt ein Blockdiagramm eines zweiten Scansystems 400, bei dem eine zweite Ausführungsform eines virtuellen Scannertreibers 408 eingesetzt wird. Das Scansystem 400 ist in der Lage, gleichzeitig mehrere Scanner 402A-C einzusetzen. Das Scansystem 400 umfasst eine über Hardwareschnittstellen 404A-C mit den Scannern 402A-C verbundene Auftragsbearbeitungs-Workstation 116. Die Scanner 402A-C können unterschiedlichen Typs sein und über unterschiedliche Hardwareschnittstellen 404A-C mit der Auftragsbearbeitungs-Workstation 116 verbunden sein, wie bereits beschrieben wurde. Außerdem umfasst das Scansystem 400 einen wie oben beschrieben ausgebildeten gemeinsamen Zwischenspeicherbereich 416, der es den Personalitätsmoduls 412A-C ermöglicht, Bilddaten in der Geschwindigkeit des Scanners zu übertragen, und der es der Scananwendung 406 ermöglicht, asynchron auf die Bilddaten zuzugreifen, ohne dass jedes Bild einzeln übertragen werden muss.

Wie in Fig. 4 gezeigt ist, sind die Personalitätsmoduls 412A-C mit der Anwendungsprogrammschnittstelle 410 des virtuellen Scannertreibers verbunden. Die Personalitätsmoduls 412A-C arbeiten auf die in Zusammenhang mit Fig. 3 beschriebene Weise. Im Wesentlichen löst die Scananwendung 406 die Scanvorgänge an den Scanners 402A-C aus, indem sie einen diesbezüglichen Befehl an die Anwendungsprogrammschnittstelle 410 des virtuellen Scannertreibers schickt. Die Anwendungsprogrammschnittstelle 410 lädt daraufhin das jeweils geeignete Personalitätsmodul 412A-C für jeden Scanner 402A-C. Jedes Personalitätsmodul 412A-C kann neben den anderen bestehen und neben den anderen im Wesentlichen parallel ablaufen, so dass ein gleichzeitiger Betrieb der Scanner 402A-C von der einzelnen Scananwendung 406 und der Anwendungsprogrammschnittstelle 410 des virtuellen Scannertreibers aus möglich ist. Außerdem erleichtern/ermöglichen es die Anwendungsprogrammschnittstelle 410 des virtuellen Scannertreibers und die Personalitätsmodule 412A-C der Scananwendung 406/der Workstation 116 in Echtzeit mit den Scannern 402A-C zu kommunizieren, diese zu betreiben und von diesen Bilddaten zu erhalten, während auf diesen Scannern 402A-C auf die bereits beschriebene Weise Scanvorgänge ablaufen. In alternativen Ausführungsformen kann diese Fähigkeit des gleichzeitigen Scannens implementiert werden, indem mehrere Scananwendungen 406 parallel an der Auftragsbearbeitungs-Workstation 116 aktiv sind. Diese Multitasking-Fähigkeit ist eine bekannte Eigenschaft. Außerdem kann die Scananwendung 406 mit einer einzigen Anwendungsprogrammschnittstelle 410 des virtuellen Scannertreibers kommunizieren, wobei mehrere Personalitätsmodule 412A-C mehrere Scanner 402A-C auf die beschriebene Weise steuern. Alternativ kann die Anwendungsprogrammschnittstelle 410 des virtuellen Scanenrtreibers selbst mehrere Male an der Auftragsbearbeitungs-Workstation 116 mit jedem Personalitätsmodul 412A-C instantiiert werden.

Ein Computer Code eines beispielhaften virtuellen Scannertreiber und eines Personalitätsmoduls für den bevorzugten ImageDirect Scanner soll auf einem Computersystem mit mindestens 64 MB RAM, einer Festplatte mit mindestens 20GB und mindestens einem Pentium Class Prozessor kompiliert werden, vorzugsweise mit Hilfe von Microsoft Visual Studio Version 6.0. Die Dateien des Codes müssen in eine Verzeichnisstruktur geladen werden. Danach müssen die Dateien auf die bekannte Weise ausgeführt werden, um den Code des virtuellen Scannertreibers zu kompilieren und auszuführen.

Die vorangegangene Beschreibung soll nur erläuternd und in keiner Weise einschränkend verstanden werden. Der Gedanke und Bereich der Erfindung werden durch die nachfolgenden Ansprüche mit allen Äquivalenten definiert.

### Liste der Bezugszeichen

- 100: Druckproduktions-Workflow
- 102: Auftragsbeginn
- 104: Auftragseingang
- 106: Auftragsbearbeitung
- 108: Druckproduktion
- 110: Auftragsvollendung
- 112: Netzwerk
- 114: Computer im Bereich der Auftragsannahme
- 116: Bearbeitungsstationen
- 118: Netzwerkserver
- 120: Druckserver
- 122: Ausgabegerät
- 124: Scanner
- 200: Bediener-Workflow
- 202: Eingabestadium
- 204: Vorbereitungsphase
- 206: Produktionsstadium
- 208: Eingabequellen
- 300: System
- 302: Scanner
- 304: Hardware-Schnittstelle
- 306: Scananwendung
- 308: virtueller Scannertreiber
- 310: Anwendungsprogrammschnittstelle
- 314 A: Hardware-Schnittstelle
- 314 B: Hardware-Schnittstelle
- 316: Zwischenspeicher
- 400: Scansystem
- 402A: Scanner
- 402B: Scanner
- 402C: Scanner
- 404A: Hardwareschnittstelle
- 404B: Hardwareschnittstelle
- 404C: Hardwareschnittstelle
- 406: Scananwendung
- 408: Anwendungsprogrammschnittstelle
- 410: Anwendungsprogrammschnittstelle
- 412A: Personalitätsmodul
- 412B: Personalitätsmodul
- 412C: Personalitätsmodul
- 414 A: Hardware-Schnittstelle
- 414 B: Hardware-Schnittstelle
- 414 C: Hardware-Schnittstelle

## Patentansprüche

1. Treiber als eine Schnittstelle zwischen einem ersten Anwendungsprogramm und einem ersten Scanner (302, 402A-C), wobei das erste Anwendungsprogramm dazu dient, Befehle an den erste Scanner (302, 402A-C) zu übertragen und der erste Scanner (302, 402A-C) dazu dient, ein Dokument abzutasten und Bild- und Statusdaten des Scanvorgangs an das erste Anwendungsprogramm zu übertragen,
**dadurch gekennzeichnet,**
**dass** der Treiber eine mit dem ersten Anwendungsprogramm verbundene Anwendungsprogrammschnittstelle umfasst, die dazu dient, die Befehle des ersten Anwendungsprogramms zu empfangen;
sowie ein mit der Anwendungsprogrammschnittstelle verbundenes erstes Scanner-Personalitätsmodul (312A, 312B, 412A, 412B, 412C), das dazu dient, die Bild- und Statusdaten vom ersten Scanner (302, 402A-C) zu empfangen und an das erste Anwendungsprogramm zu übertragen sowie die Befehle an den ersten Scanner zu übertragen,
wobei die Anwendungsprogrammschnittstelle und das erste Scanner-Personalitätsmodul die Echtzeit-Kommunikation zwischen dem ersten Anwendungsprogramm und dem ersten Scanner (302, 402A-C) erleichtern.

2. Treiber nach Anspruch 1,
**dadurch gekennzeichnet,**
**dass** der erste Scanner (302, 402A-C) ein Scanner eines ersten Typs ist, wobei das erste Scanner-Personalitätsmodul (312A, 312B, 412A, 412B, 412C) diesem Typ zugeordnet ist, und dass der Treiber ferner ein zweites Scanner-Personalitätsmodul (312A, 312B, 412A, 412B, 412C) umfasst, das mit der ersten Anwendungsprogrammschnittstelle verbunden und einem Scanner (302, 402A-C) eines anderen Typs zugeordnet ist.

3. Treiber nach einem der Ansprüche 1 bis 2,
**dadurch gekennzeichnet,**
**dass** das erste Scanner-Personalitätsmodul (312A, 312B, 412A, 412B, 412C) weiterhin dazu dient, gleichzeitig Bild- und Statusdaten vom ersten Scanner (302, 402A, 402B, 402C) zu empfangen und die Befehle an den ersten Scanner (302, 402A, 402B, 402C) zu übermitteln.

4. Treiber nach einem der Ansprüche 1 bis 3,
**dadurch gekennzeichnet,**
**dass** die erste Anwendungsprogrammschnittstelle weiterhin dazu dient, die Bilddaten an einen Zwischenspeicher (316, 416) zu leiten, der von dem ersten Anwendungsprogramm asynchron abrufbar ist.

5. Treiber nach Anspruch 4,
**dadurch gekennzeichnet,**
**dass** der Zwischenspeicher (316, 416) eine Festplatte umfasst.

6. Treiber nach einem der Ansprüche 1 bis 5,
**dadurch gekennzeichnet,**
**dass** das erste Scanner-Personalitätsmodul weiterhin dazu dient, die Befehle im Wesentlichen gleichzeitig an den ersten Scanner (312A, 312B, 412A, 412B, 412C) zu übermitteln, während der Scanvorgang abläuft.

7. Treiber nach Anspruch 6,
**dadurch gekennzeichnet,**
**dass** die Befehle Befehle bezüglich einer Anpassung der Qualität des Scanvorgangs umfassen.

8. Ein in einer Computer-Workstation implementiertes System, das als Schnittstelle zwischen mindestens einem auf der Workstation (116) ablaufenden Anwendungsprogramm und mindestens einem mit der Workstation (116) verbundenen Scanner (312A, 312B, 412A, 412B, 412C) dient, der eine Scannerschnittstelle (304, 404A, 404B, 404C) umfasst,
**dadurch gekennzeichnet,**
**dass** das System ein erstes Modul (312A, 312B, 412A, 412B, 412C) aufweist, das dazu dient, Befehle von dem mindestens einen Anwendungsprogramm zu empfangen;
sowie ein mit dem ersten Modul verbundenes zweites Modul (312A, 312B, 412A, 412C), das einem ersten Scanner (302, 402A, 402B, 402C) zugeordnet ist, das mit der Scannerschnittselle (304, 404A, 404B, 404C) verbunden ist und das dazu dient, Befehle von dem ersten Modul (312A, 312B, 412A, 412C) zu empfangen und diese für die Scannerschnittstelle (304, 404A, 404B, 404C) zu übersetzen,
wobei das zweite Modul (312A, 312B, 412A, 412C) ferner dazu dient, die Bild- und Statusdaten vom ersten Scanner (302, 402A, 402B, 402C) über die erste Scannerschnittstelle (304, 404A, 404B, 404C) zu empfangen und die Bild- und Statusdaten an das mindestens eine Anwendungsprogramm zu liefern,
wobei das zweite Modul (312A, 312B, 412A, 412C) in der Lage ist, die Befehle an die Scannerschnittstelle (304, 404A, 404B, 404C) zu übersetzen und die Bild- und Statusdaten zu empfangen, während an dem ersten Scanner (302, 402A, 402B, 402C) ein Scanvorgang abläuft, und
wobei das zweite Modul in der Lage ist, die Befehle an den Scanner (302, 402A, 402B, 402C) zu übersetzen und die Bild- und Statusdaten an das mindestens eine Anwendungsprogramm zu übermitteln, während an dem ersten Scanner (302, 402A, 402B, 402C) ein Scanvorgang abläuft.

9. System nach Anspruch 8,
**dadurch gekennzeichnet,**
**dass** das erste Modul (312A, 312B, 412A, 412C) weiterhin dazu dient, eine einheitliche Schnittstelle für alle Anwendungen zu schaffen.

10. System nach einem der Ansprüche 8 bis 9,
**dadurch gekennzeichnet,**
**dass** die Scannerschnittstelle (304, 404A, 404B, 404C) weiterhin eine Hardwareschnittstelle und eine Softwareschnittstelle umfasst.

11. System nach einem der Ansprüche 8 bis 10,
**dadurch gekennzeichnet,**
**dass** die Befehle Befehle zur Anpassung eines bereits ablaufenden Scanvorgangs umfassen.

12. System nach Anspruch 11,
**dadurch gekennzeichnet,**
**dass** die Befehle Befehle zur Anpassung der Scanqualität des ablaufenden Scanvorgangs umfassen.

13. System nach einem der Ansprüche 8 bis 12,
**dadurch gekennzeichnet,**
**dass** weiterhin ein Zwischenspeicher (316, 416) vorgesehen ist, auf den das mindestens eine Anwendungsprogramm asynchron zugreifen kann, wobei das erste Modul (312A, 312B, 412A, 412C) weiterhin dazu dient, die Bilddaten in dem Zwischenspeicher (316, 416) zu speichern.

14. System nach Anspruch 13,
**dadurch gekennzeichnet,**
**dass** der Zwischenspeicher (316, 416) eine Festplatte umfasst.

15. Verfahren zum Verbinden eines ersten Anwendungsprogramms mit einem ersten Scanner (302, 402A, 402B, 403C), wobei das erste Anwendungsprogramm auf einem mit dem ersten Scanner (302, 402A, 402B, 402C) verbundenen ersten Computer abläuft,
**dadurch gekennzeichnet,**
**dass** es die folgenden Schritte umfasst:
(a) Initiieren eines ersten Scanvorgangs eines ersten Dokuments am ersten Scanner (302, 402A, 402B, 402C);
(b) Empfangen von ersten Bilddaten, die durch den ersten Scanvorgang erzeugt werden, während dieser abläuft;
(c) Empfangen von ersten Statusdaten vom ersten Scanner (302, 402A, 402B, 402C), während der erste Scanvorgang abläuft;
(d) Bereitstellen der ersten Bild- und Statusdaten für das erste Anwendungsprogramm, während der erste Scanvorgang abläuft;
(e) Anpassen des ersten Scanvorgangs, während dieser abläuft.

16. Verfahren nach Anspruch 15,
**dadurch gekennzeichnet,**
**dass** der Schritt (e) weiterhin das Anpassen des ersten Scanvorgangs auf der Basis der empfangenen ersten Bild- und Statusdaten umfasst.

17. Verfahren nach einem der Ansprüche 15 bis 16
**dadurch gekennzeichnet,**
**dass** der Schritt (e) weiterhin das Anpassen des ersten Scanvorgangs nach den Anweisungen des ersten Anwendungsprogramms umfasst.

18. Verfahren nach Anspruch 17,
**dadurch gekennzeichnet,**
**dass** das Anpassen automatisch erfolgt.

19. Verfahren nach Anspruch 18,
**dadurch gekennzeichnet,**
**dass** der Schritt (e) weiterhin eine Anpassung der Bebilderungsalgorithmen des ersten Scanners (302, 402A, 402B, 402C) umfasst.

20. Verfahren nach einem der Ansprüche 15 bis 19,
**dadurch gekennzeichnet,**
**dass** der Schritt (e) weiterhin eine Anpassung der Bildauflösung des ersten Scanners (302, 402A, 402B, 402C) umfasst.

21. Verfahren nach nach einem der Ansprüche 15 bis 20,
**dadurch gekennzeichnet,**
**dass** der Schritt (e) weiterhin eine Anpassung der Bildauflösung des ersten Scanners (302, 402A, 402B, 402C) umfasst.

22. Verfahren nach nach einem der Ansprüche 15 bis 21,
**dadurch gekennzeichnet,**
**dass** der Schritt (d) ein Bereitstellen der ersten Bilddaten an einen Zwischenspeicherbereich (316, 416) umfasst, wobei der Zwischenspeicherbereich (316, 416) dem ersten Anwendungsprogramm zugänglich ist.

23. Verfahren nach Anspruch 22,
**dadurch gekennzeichnet,**
**dass** der Speicherbereich (316, 416) ein Laufwerk umfasst.

24. Verfahren nach Anspruch 22,
**dadurch gekennzeichnet,**
**dass** der Zwischenspeicherbereich (316, 416) dem ersten Anwendungsprogramm asynchron zugänglich ist.

25. Verfahren nach nach einem der Ansprüche 15 bis 24,
**dadurch gekennzeichnet,**
**dass** der erste Scanvorgang mit einer Geschwindigkeit von ungefähr 65 Seiten pro Minute abläuft.

26. Verfahren nach Anspruch 15,
**dadurch gekennzeichnet,**
**dass** der Schritt (a) weiterhin umfasst, dass mindestens ein vom ersten Anwendungsprogramm erzeugter generischer Befehl zum Initiieren des ersten Scanvorgangs im ersten Modul (312A, 312B, 412A, 412B, 412C) empfangen wird, dass dieser mindestens eine generische Befehl an ein mit dem ersten Modul (312A, 312B, 412A, 412B, 412C) verbundenes zweites Modul (312A, 312B, 412A, 412B, 412C) übertragen wird, dass der mindestens eine generische Befehl im zweiten Modul (312A, 312B, 412A, 412B, 412C) in mindestens einen spezifischen Befehl übersetzt wird und dieser spezifische Befehl von dem zweiten Modul (312A, 312B, 412A, 412B, 412C) an den ersten Scanner (302, 402A, 402B, 402C) übermittelt wird,
**dass** der Schritt (b) weiterhin das Empfangen der ersten Bilddaten durch das zweite Modul (312A, 312B, 412A, 412B, 412C) umfasst;
**dass** der Schritt (c) weiterhin das Empfangen der ersten Statusdaten durch das zweite Modul (312A, 312B, 412A, 412B, 412C) umfasst; und
**dass** der Schritt (d) weiterhin das Übermitteln der ersten Bild- und Statusdaten vom zweiten Modul (312A, 312B, 412A, 412B, 412C) an das erste Anwendungsprogramm umfasst.

27. Verfahren nach Anspruch 15,
**dadurch gekennzeichnet,**
**dass** der erste Scanner (302, 402A, 402B, 402C) als ein Scanner eines ersten Typs ausgebildet ist und das zweite Modul (312A, 312B, 412A, 412B, 412C) dem ersten Typ zugeordnet ist, und dass das Verfahren weiterhin den Schritt umfasst, dass ein mit dem ersten Modul (312A, 312B, 412A, 412B, 412C) verbundenes und einem zweiten Scanner (302, 402A, 402B, 402C) eines zweiten Typs zugeordnetes drittes Modul (312A, 312B, 412A, 412B, 412C) bereitgestellt wird.

28. Verfahren nach Anspruch 27,
**dadurch gekennzeichnet,**
**dass** das dritte Modul (312A, 312B, 412A, 412B, 412C) mit dem ersten Modul (312A, 312B, 412A, 412B, 412C) anstelle des zweiten Moduls (312A, 312B, 412A, 412B, 412C) verbunden ist.

29. Verfahren nach Anspruch 27,
**dadurch gekennzeichnet,**
**dass** das dritte Modul (312A, 312B, 412A, 412B, 412C) gleichzeitig mit dem ersten Modul (312A, 312B, 412A, 412B, 412C) und dem zweiten Modul (312A, 312B, 412A, 412B, 412C) verbunden ist.
